Europäisches Patentamt

European Patent Office

Office européen des brevets

(11) Publication number: **0 209 721**
**A1**

# EUROPEAN PATENT APPLICATION

(21) Application number: 86108227.9

(22) Date of filing: 16.06.86

(51) Int. Cl.⁴: **G 01 D 5/26**

(30) Priority: 26.06.85 US 749054

(43) Date of publication of application:
28.01.87 Bulletin 87/5

(84) Designated Contracting States:
DE FR GB

(71) Applicant: Rockwell International Corporation
2230 East Imperial Highway
El Segundo, California 90245(US)

(72) Inventor: Yeh, Pochi A.
1975 Ferndale Place
Thousand Oaks, CA 91360(US)

(74) Representative: Wächtershäuser, Günter, Dr.
Tal 29
D-8000 München 2(DE)

(54) Laser sensor.

(57) A laser sensor includes a laser resonator, with an efficient reflector at a first end of the resonator and a partially reflecting output coupler at a second end of the resonator. A gain medium is positioned between the reflector and the output coupler with a source of pumping energy directed into the gain medium. A perturbation sensitive element is positioned within the laser resonator to cause differences in the optical path lengths of first and second polarization modes of a coherent beam in the resonator in response to an external perturbation. A polarizing beam splitter separates the coherent beam into a first polarization mode beam and a second polarization mode beam, and a polarization rotator rotates the polarization of the first mode beam such that it is parallel to the polarization of the second mode beam. The first and second mode beams are recombined to cause interference between the beams and thereby produce a fringe pattern whose motion is indicative of a perturbation imparted to the perturbation sensitive element.

EP 0 209 721 A1

85SC22
EA-5488

LASER SENSOR

Pochi A. Yeh

BACKGROUND OF THE INVENTION

This invention relates to sensors which use lasers to detect parameters such as acceleration, magnetic field intensity, gravitational attraction, etc.

A vast number of new sensor devices have emerged over the last two decades, in large part due to the advent of lasers. A myriad of devices and techniques have been used to date for sensing acceleration. Inertial navigation, seismometry, vibration measurements, and other applications have served as the drivers for achieving higher performance. Mechanical and electro-mechanical devices have been the most commonly used, but surface acoustic wave, Fabry-Perot, fiber-optic, passive electro-optic or photoelastic, and integrated optical devices have all been recently explored. The field of high sensitivity devices, however, is becoming dominated by optical sensors.

Optical sensors generally operate on the principle of detecting changes in optical path lengths. Fiber-optic devices amplify the effects by sensing the accumulated changes over the length of a fiber. Fabry-Perot devices amplify by resonance effects. Since the wavelengths of light (near the visible range) and acoustic waves (near $10^8$ Hz range) are comparable, the fundamental limits of sensitivity can be made comparable for passive optical sensors and surface acoustic wave

-1-

devices, assuming the same enhancement effects (such as, for example, resonance) can be exploited.

The sensitivity and dynamic range of such sensors have been steadily increasing, but the performance requirements have also been greatly increasing. New developments are needed in advanced sensors in order to deliver high sensitivity and dynamic range, while miniaturizing the sensors themselves.

SUMMARY OF THE INVENTION

The optical sensor of this invention can be used for high accuracy sensing of parameters such as acceleration. It can provide significant improvement in terms of sensitivity and dynamic range (approximately $10^{10}$), while it is particularly suitable for ultra-miniaturization. The device is an active sensor and is based on frequency splitting of the polarization modes of a laser due to the effects of an external perturbation on an intracavity perturbation sensitive material. The sensor, for example, can measure acceleration and, when properly biassed, can also serve as a speedometer, since each of the beat frequency fringes will correspond to a unique speed of the vehicle on which the sensor is mounted. This device does not require an external reference, contains no moving parts, and has the potential for low cost manufacture. Its extreme sensitivity is obtained by near perfect common mode rejection for two modes of a laser, while effects due to a signal will appear as the difference between the two modes.

The laser sensor of this invention includes a laser resonator, with an efficient reflector at a first end of the resonator and a partially reflecting output coupler at a second end of the resonator. A gain medium is positioned between the reflector and the output coupler with a source of pumping energy directed into the gain medium. A perturbation sensitive element is positioned within the laser resonator to cause differences in the optical path lengths of first and second polarization modes of a coherent beam in the resonator in response to an external perturbation. A polarizing beam splitter separates the coherent beam into a first polarization mode beam and a second polarization mode beam, and a polarization rotator rotates the polarization of the first mode beam such that it is parallel to the polarization of the second mode beam. The first and second mode beams are recombined to cause interference between the beams and thereby produce a fringe pattern whose motion is indicative of a perturbation imparted to the perturbation sensitive element.

In a more particular embodiment, the perturbation sensitive element is provided by a photoelastic material, which enables the apparatus to measure acceleration.


DESCRIPTION OF THE DRAWINGS

Additional details of the invention are discussed below in conjunction with the drawing, which is a schematic diagram depicting a photoelastic laser sensor constructed according to the present invention.

-3-

DESCRIPTION OF THE INVENTION

The sensor of this invention utilizes a perturbation sensitive element in a laser cavity to convert effects due to an external perturbation into changes in frequency. By analogy to a ring laser gyro, this sensor derives its extreme sensitivity from cancelling out all common mode effects in two fundamental oscillation modes of a laser. The output signal is observed as a frequency difference generated by an event which affects those two modes differently. A frequency signal is generated due to the external perturbation, while the effects of frequency jitter of the laser, as well as temperature drifts and other variations, are automatically cancelled out.

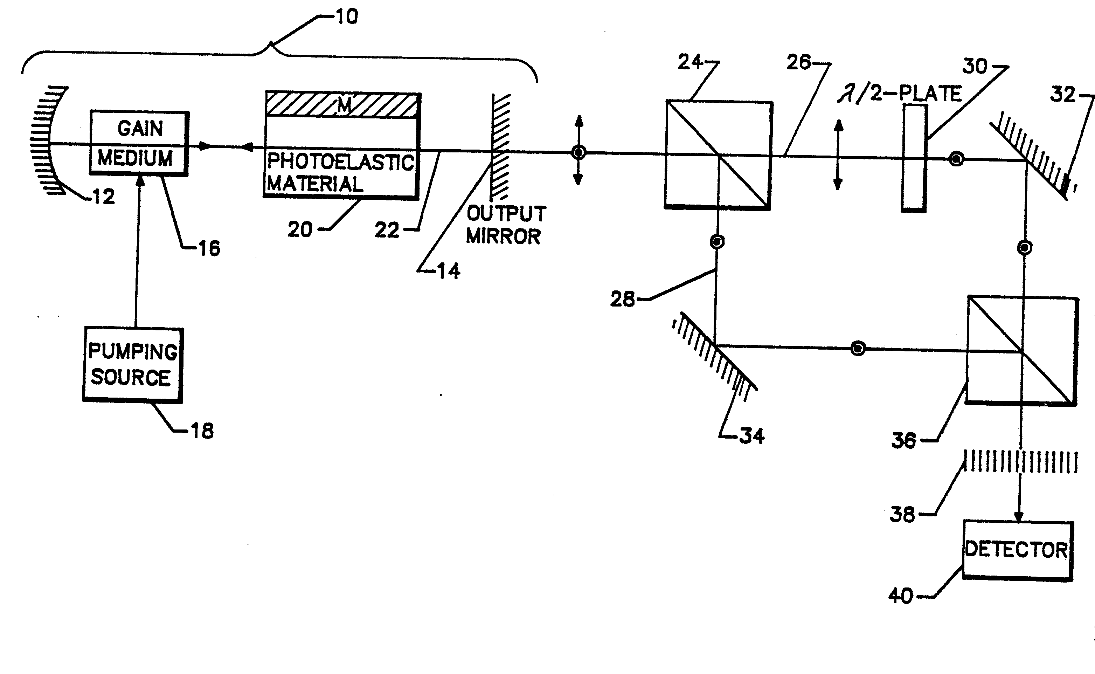

Figure 1 schematically depicts a photoelastic laser sensor constructed according to the present invention. The sensor incorporates a laser resonator 10, which includes an efficient reflector 12 (such as a focussing mirror) and a partially reflecting output coupler 14 (such as a partially silvered mirror), which define the laser cavity. A laser gain medium 16 is placed in the cavity between the reflector and the output coupler. A source of electrical or optical pumping energy 18 is directed into the laser resonator to provide the energy for the laser to operate. A photoelastic element 20, with a mass M (which can include mass added to the element, if necessary), is positioned within the laser resonator, causing differences in the optical path lengths of the first and second polarization modes of a beam 22 of coherent light generated in the resonator. A polarizing beam splitter 24 separates the coherent beam 22, which exits the laser through the output coupler 14, into a

-4-

transmitted first polarization mode beam 26 and a reflected second polarization mode beam 28. A polarization rotator 30 (here a half-wave plate) rotates the polarization of the first mode beam 26 by 90 degrees so that it is parallel to the polarization of the second mode beam 28. Mirrors 32 and 34 then redirect the beams 26 and 28 so that they are recombined in a beam splitter 36. Interference between the recombined beams produces a fringe pattern 38, which is sensed by a detector 40. The behavior of the fringe pattern will be indicative of forces applied to the photoelastic element 20 in a direction perpendicular to the beam path of the resonator 10.

The photoelastic material can be either isotropic or anisotropic, but for the simplest case of an isotropic medium (fused silica, for example), the indices of refraction for the two polarizations x and y ($n_x$ and $n_y$) can be written as

$$n_x = n - 1/2 \ (n^3 \ P_{11} \ S) \qquad\qquad 1)$$

$$n_y = n - 1/2 \ (n^3 \ P_{12} \ S) \qquad\qquad 2)$$

where $P_{11}$ and $P_{12}$ are the photoelastic constants, and S is the strain. The strain S is related (by the material stiffness constant) to the stress T (T = F/A = Ma/A) in the photoelastic material, where A is the area. In the absence of gravity or acceleration, the photoelastic material is optically isotropic and the two independent polarization states (x and y) are degenerate in oscillation frequency. In other words, both polarization states oscillate at exactly the same frequency, which is determined by the gain medium and the optical path length of the resonator. When an acceleration occurs in, say, the x direction perpendicular to the resonator, a force $F = ma$ is applied to the photoelastic material due to the inertia of the mass. As a result of the photoelastic effect the material becomes birefringent, and the degeneracy in frequency is removed. The resultant split df in frequencies of the two polarization modes is given by

$$df = f \ dn \ L/nL \qquad\qquad 3)$$

where f is the laser frequency, $dn = n_y - n_x$ is the induced birefringence, L is the length of the photoelastic material, and nL is the optical path length of the laser resonator. Equations 1) - 3) indicate that the frequency split df is proportional to the acceleration:

$$df = r \ a \qquad\qquad 4)$$

where r is a proportionality constant. df can be measured by the beat frequency generated when the two modes are made to interfere. Integration of the frequency difference df over a period of time or monitoring the fringes of the interference pattern of these two modes can be used to determine the change in velocity.

Such an accelerometer can also be used as a speedometer, since each interference fringe corresponds to a unique speed of the vehicle (relative to the inertial frame in which the device was initialized). A set of stationary fringes corresponds to a zero beat frequency, which

-6-

indicates that the vehicle is in uniform motion without acceleration. A displacement of one fringe corresponds to a change of speed dv given by

$$dv = 1/r \qquad\qquad 5).$$

where r is the same proportionality constant as in Equation 4).

To consider a specific example, if a 1 cm long glass rod $(A = 0.5 \text{ cm}^2)$ is loaded by a mass $M = 10$ gm, and is used in a He-Ne laser sensor, then using the parameters for the stiffness constant $s = 1.27 \times 10^{-11} \text{ m}^2/\text{Nt}$, $p_{12} = 0.27$, $p_{11} = 0.12$, and laser frequency $f = 4.7 \times 10^{14}$, a value of $r = 2.0 \times 10^5$ is obtained. Thus, an acceleration of one g corresponds to a frequency difference of 2 MHz. A displacement of one fringe will then correspond to a change in velocity of 5 um/sec. The sensitivity of the device can be increased considerably if the device parameters are properly selected for the application.

The sensitivity and dynamic range of the device are functions of the specific design. The dynamic range is also limited by how much frequency difference is allowed by the gain curve of the laser medium. The dynamic range, however, is projected to be several orders of magnitude, and values exceeding $10^{10}$ appear to be possible.

Since different polarization modes of semiconductor lasers are not necessarily degenerate, a frequency offset at zero acceleration will exist when such a laser is used in this device. This offset may be tolerable (i.e., at low frequency) or it can be compensated by some other means such as, for example, by using birefringent elements.

In conclusion, although a typical embodiment of the invention has been described, modifications and additional embodiments will undoubtedly be apparent to those skilled in the art. If the photorefractive crystal is replaced by an electro-optic crystal, for example, then the same laser sensor system can be employed for sensing extremely small electric fields. Conversely, the same setup can be utilized for high accuracy measurement of electro-optic coefficients. The principle of this invention can also be extended to sensing other quantities, such as magnetic field, acoustic field, temperature, pressure, etc., provided the appropriate material is used for the perturbation sensitive element. The same setup will also provide high accuracy measurements of magneto-optic, acousto-optic, piezo-optic, thermo-optic, etc. coefficients. In general, equivalent elements can be substituted for those described and some features of the invention may be useful independently of other features. Consequently, the particular examples which have been presented should be considered as illustrative only and not inclusive. The appended claims are more indicative of the full scope of the invention.

CLAIMS:

1. A laser sensor, comprising:

a laser resonator, including

an efficient reflector at a first end of the resonator,

a partially reflecting output coupler at a second end of the resonator opposite the first end,

a gain medium positioned between the reflector and the output coupler, and

a source of pumping energy directed into the gain medium;

a perturbation sensitive element positioned within the laser resonator to cause differences in the optical path length of first and second polarization modes of a coherent beam in the resonator in response to an external perturbation;

a polarizing beam splitter for separating the coherent beam into a first polarization mode beam and a second polarization mode beam;

a polarization rotator for rotating the polarization of the first mode beam such that it is parallel to the polarization of the second mode beam; and

means for recombining the first and second mode beams to cause interference between the beams and thereby produce a fringe pattern whose motion is indicative of perturbations imparted to the perturbation sensitive element.

2. The sensor of Claim 1, wherein the perturbation sensitive element further comprises a photoelastic element sensitive to force.

3. A method of measuring a perturbation, comprising the steps of:

providing a laser resonator, including

an efficient reflector at a first end of the resonator,

a partially reflecting output coupler at a second end of the resonator opposite the first end,

a gain medium positioned between the reflector and the output coupler, and

a source of pumping energy directed into the gain medium;

positioning a perturbation sensitive element within the laser resonator to cause differences in the optical path lengths of first and second polarization modes of a coherent beam in the resonator in response to an external perturbation;

separating the coherent beam into a first polarization mode beam and a second polarization mode beam;

rotating the polarization of the first mode beam such that it is parallel to the polarization of the second mode beam; and

recombining the first and second mode beams to cause interference between the beams and thereby produce a fringe pattern whose motion is indicative of perturbations imparted to the perturbation sensitive element.

4. The method of Claim 3, wherein the perturbation sensitive element further comprises a photoelastic element sensitive to force.

GAIN MEDIUM

PHOTOELASTIC MATERIAL

M

OUTPUT MIRROR

PUMPING SOURCE

λ/2-PLATE

DETECTOR

10
12
16
18
20
22
14
24
26
30
32
28
34
36
38
40

EA-5488

020972

# EUROPEAN SEARCH REPORT

## DOCUMENTS CONSIDERED TO BE RELEVANT

EP 86108227.9

| Category | Citation of document with indication, where appropriate, of relevant passages | Relevant to claim | CLASSIFICATION OF THE APPLICATION (Int Cl 4) |
|---|---|---|---|
| A | DE - A1 - 2 451 203 (IBM)<br>* Claim 1 *<br>-- | 1 | G 01 D 5/26 |
| A | DE - B2 - 2 257 278 (RCA)<br>* Claim 1 *<br>-- | 1 | |
| A | DE - A - 2 115 742 (XEROX)<br>* Fig. 1 *<br>---- | 1 | |

### TECHNICAL FIELDS SEARCHED (Int. Cl 4)

G 01 D 5/00

H 01 S 3/00

The present search report has been drawn up for all claims

| Place of search | Date of completion of the search | Examiner |
|---|---|---|
| VIENNA | 07-11-1986 | KUNZE |